Europäisches Patentamt

European Patent Office

Office européen des brevets

(19)

(11) Veröffentlichungsnummer: **0 227 995 B1**

(12) **EUROPÄISCHE PATENTSCHRIFT**

(45) Veröffentlichungstag der Patentschrift: **24.07.91**

(21) Anmeldenummer: **86117210.4**

(22) Anmeldetag: **10.12.86**

Verbunden mit 87901264.9/0287571
(europäische
Anmeldenummer/Veröffentlichungsnummer)
durch Entscheidung vom 14.07.89.

(51) Int. Cl.⁵: **C09D 5/44**, C08L 63/02,
C08L 67/02, C09D 163/02,
C09D 167/02

(54) **Anionisch abscheidbares Bindenmittel, Verfahren zu seiner Herstellung, Überzugsmittel aus Basis des Bindemittels sowie deren Verwendung.**

(30) Priorität: **21.12.85 DE 3545617**

(43) Veröffentlichungstag der Anmeldung:
**08.07.87 Patentblatt 87/28**

(45) Bekanntmachung des Hinweises auf die
Patenterteilung:
**24.07.91 Patentblatt 91/30**

(84) Benannte Vertragsstaaten:
**AT BE CH DE ES FR GB IT LI NL SE**

(56) Entgegenhaltungen:
**EP-A- 0 049 868**
**FR-A- 2 143 599**
**US-A- 4 247 439**
**US-A- 4 304 804**

**CHEMICAL ABSTRACTS, Band 96, Nr. 18, 3. Mai 1982, Seite 100, Zusammenfassung Nr. 144595c, Columbus, Ohio, US; & SU-A-883 122 ("LAKOKRASPOKRYTIE" SCIENTIFIC-INDUSTRIAL ENTERPRISES) 23-11-1981**

(73) Patentinhaber: **BASF Lacke + Farben Aktien-gesellschaft**
**Max-Winkelmann-Strasse 80**
**W-4400 Münster(DE)**

(72) Erfinder: **Hille, Hans-Dieter**
**In der Schlade 24**
**W-5060 Bergisch-Gladbach(DE)**
Erfinder: **Hölscher, Hans-Jörg, Dr.**
**Haus Angelmodde 28**
**W-4400 Münster(DE)**
Erfinder: **Reichelt, Uwe**
**Tulpenweg 15**
**W-4542 Tecklennburg-Ledde(DE)**
Erfinder: **Scherping, Karl-Heinz, Dr.**
**Wiesenweg 12**
**W-4406 Drensteinfurt(DE)**

EP 0 227 995 B1

## Beschreibung

Die Erfindung betrifft ein anionisch abscheidbares, durch Neutralisation mit Basen wasserdispergierbares Bindemittel (A), erhältlich durch Umsetzung von Epoxidharzen auf der Basis von Bisphenolen mit einem Carboxylgruppen enthaltenden Polyester.

Epoxidharze, beispielsweise auf der Basis von 2,2-Bis-(4-hydroxyphenyl)-propan, also Bisphenol A, sind als Bindemittel für zur Beschichtung von Dosen geeignete Lacke sowohl auf der Basis organischer Lösungsmittel als auch auf Wasserbasis bekannt.

Bei konventioneller Spritzapplikation muß mit niedrigem Festkörper gearbeitet werden, um die erforderliche niedrige Viskosität einzustellen. Dadurch resultiert eine starke Belastung durch Lösungsmittelemissionen.

Die Vorteile von wäßrigen Systemen liegen in einer deutlich geringeren Lösungsmittelemission und einer Kostensenkung durch die eingesparten Lösungsmittel.

Besonders vorteilhaft ist jedoch die Applikation von Kunstharzdispersionen mittels der Elektrotauchlackierung, wobei eine nahezu 100%ige Lackausbeute und eine nochmals verringerte Emission gegenüber der Spritzapplikation erreicht werden können. Außerdem ist die Beschichtung unterschiedlichster Dosengeometrien möglich durch den Effekt des Umgriffs bei der Elektrotauchlackierung.

Für Getränkedosen mit überwiegend sauren Füllgütern ist die anodische Elektrotauchlackierung vorteilhafter als die kathodische Variante, da die kathodisch abgeschiedenen Filme zumeist Amingruppen enthalten und somit durch saure Füllgüter angelöst werden können.

Zur Anwendung von Bindemittelsystemen im wäßrigen Medium müssen diese durch die Einführung solubilisierender Gruppen derart modifiziert werden, daß ein wasserlösliches oder wasserdispergierbares System entsteht.

Aus P.V. Robinson, J. Coat. Technol. 53, Nr. 674, Seite 23 (1981) und C.G. Demmer und N.S. Moss, J. Oil Col. Chem. Assoc. 65, Nr. 249 (1982) sind wasserverdünnbare Bindemittelsysteme auf Epoxidharzbasis für Dosenlacke bekannt. Dabei werden in das Epoxidharz Carboxylgruppen beispielsweise durch Reaktion der Epoxidgruppen mit Di- oder Polycarbonsäuren eingebaut. Eine andere Möglichkeit zur Einführung von Carboxylgruppen in das Bindemittel besteht darin, daß ein hydroxylgruppenhaltiges Bindemittel mit einem Carbonsäureanhydrid zur Reaktion gebracht wird. Die Wasserlöslichkeit dieser Bindemittel wird durch Neutralisation mit flüchtigen Aminen erreicht. Systeme, in denen Polycarbonsäuren über Halbesterfunktionen an Polymere gebunden sind, sind jedoch sehr hydrolyseanfällig Die daraus resultierenden wäßrigen Dispersionen weisen daher eine zu geringe Lagerstabilität auf.

Aus der DE-PS 27 47 818 sind anionisch abscheidbare, durch Neutralisation mit Basen wasserdispergierbare Bindemittel bekannt, die erhalten werden durch Umsetzung von Epoxidharzen mit einem mittleren Molekulargewicht von mindestens 3000 g/mol auf der Basis von Bisphenolen mit einem Carboxylträger. Das wassersolubilisierbare Harz wird hergestellt durch Addition eines Bisphenols an den Diglycidylether eines Bisphenols, wobei die Bisphenol-Diglycidylether Epoxiäquivalentgewichte bis etwa 2500 aufweisen. Das erhaltene Addukt wird gemäß der DE-PS 27 47 818 mit Carbonsäureanhydriden, wie beispielsweise mit Trimellithsäureanhydrid, weiter umgesetzt und mit Aminoplastharzen vernetzt. Daraus resultierende wäßrige Überzugszusammensetzungen werden gemäß der Patentschrift bevorzugt zur Beschichtung von Verpackungsbehältern aus Metall verwendet. Der Nachteil der aus der DE-PS 27 47 818 bekannten Zusammensetzungen besteht darin, daß die Carbonsäuren über Halbesterfunktionen an das polymere Epoxygrundharz gebunden sind, woraus sich eine Hydrolyseanfälligkeit ergibt.

Aus der US-PS 4,304,804 sind wäßrige Überzugszusammensetzungen bekannt auf Basis eines Carboxylgruppen enthaltenden Polymeren und einer niedrigmolekularen Epoxidharzkomponente. Die Carboxylgruppen enthaltenden Polymere werden erhalten durch Addition von Polycarbonsäuren an die Epoxidgruppen eines niedrigmolekularen Polyepoxids. Die erhaltene COOH-Komponente reagiert anschließend unter Ausbildung von $\beta$-Hydroxiestergruppen mit einem niedrigmolekularen Epoxidharz. Die Zusammensetzungen werden mit Hilfe von Basen wasserdispergierbar gemacht. Die Überzugsmittel finden Verwendung als Beschichtungsmittel für Metallbehälter. Die Bindemittelzusammensetzung gemäß der US-PS 4,304,804 ist aufgrund der $\beta$-Hydroxiestergruppen hydrolyseanfällig. Die wäßrigen Dispersionen weisen daher Probleme bezüglich der Lagerstabilität auf.

Der Erfindung lag daher die Aufgabe zugrunde, modifizierte Epoxidharze, insbesondere zur Beschichtung von Konserven- und Getränkedosen, zu entwickeln, wobei die modifizierten Epoxidharze lagerstabile, wäßrige Dispersionen ergeben sollten. Daraus hergestellte Beschichtungsmittel sollten sich mit herkömmlichen Beschichtungstechniken einwandfrei verarbeiten und insbesondere problemlos mittels der anodischen Elektrotauchlackierung applizieren lassen. Die Elektrotauchlacke sollten unter Berücksichtigung der Gegebenheiten industrieller Dosenfertigung Beschichtungszeiten zwischen 0,5 und 30 s ermöglichen. Unter

2

EP 0 227 995 B1

diesen Bedingungen sollten sich die für Blechemballagen typischen Filmschichtstärken von 4 bis 10 $\mu$m herstellen lassen. Die abgeschiedenen Filme sollten unempfindlich gegenüber in Frage kommenden Spülmedien sein. Außerdem sollten die Elektrotauchlacke in gleichem Maße für unterschiedliche Metallsubstrate, wie z.B. Weißblech und Aluminium, einsetzbar sein. Die eingebrannten Lackfilme sollten mindestens das Eigenschaftsniveau konventioneller Innenschutzlacke bezüglich Porenfreiheit, Füllgutbeständigkeit, Blechhaftung, Härte, Elastizität und Geschmacksneutralität erreichen bzw. dieses übertreffen. Zur ersten Beurteilung der Füllgutbeständigkeit in Form von Kurztests ist dabei wichtig, die Pasteurisations- bzw. Sterilisationsbeständigkeit eingebrannter Lackfilme gegenüber verschiedenen Testlösungen, im einfachsten Fall gegenüber Wasser, zu bestimmen.

Überraschenderweise wurde gefunden, daß die Aufgabe durch ein Bindemittel der eingangs genannten Art gelöst wird, das dadurch gekennzeichnet ist, daß als Carboxylgruppen enthaltende Polyester Polykondensate aus aromatischen und/oder aliphatischen Dicarbonsäuren, aromatischen Dicarbonsäureanhydriden, aromatischen Tricarbonsäureanhydriden, aromatischen Tetracarbonsäureanhydriden und -dianhydriden sowie aliphatischen und cycloaliphatischen Di- und Triolen verwendet werden, die Funktionalität des Carboxylgruppen enthaltenden Polyesters 3 bis 8 beträgt, sein mittleres Molekulargewicht kleiner als 2000 g/mol ist, die Epoxidharze ein mittleres Molekulargewicht von mindestens 3000 g/mol aufweisen und das Bindemittel (A) eine Säurezahl von 50 bis 120 hat.

Bei den Epoxidharzen auf der Basis von Bisphenolen handelt es sich vorzugsweise um Umsetzungsprodukte von Bisphenol A oder Bisphenol F mit Epichlorhydrin. Erfindungsgemäß müssen diese Epoxidharze ein mittleres Molekulargewicht von mindestens 3000 g/mol aufweisen.

Die verwendeten Polyesterpolycarbonsäuren sind bekannte Polykondensate aus aromatischen und/oder aliphatischen Dicarbonsäuren, aromatischen Dicarbonsäureanhydriden, aromatischen Tricarbonsäureanhydriden, aromatischen Tetracarbonsäureanhydriden und -dianhydriden sowie aliphatischen und cycloaliphatischen Diolen und Triolen. Besonders vorteilhaft ist es, wenn die Funktionalität der Polyestercarbonsäuren 4 bis 6 beträgt. Die Polykondensate können ferner mit Esterdiolen und/oder Glycidestern von Monocarbonsäuren modifiziert sein. Als Beispiel für geeignete Esterdiole sei Hydroxypivalinsäureneopentylglykolester genannt.

Besonders bevorzugt werden Polykondensate aus mindestens dreiwertigen Polycarbonsäuren oder mindestens dreiwertigen Polycarbonsäureanhydriden mit Diolen verwendet. Als Beispiel hierfür sei das Kondensationsprodukt aus Trimellithsäureanhydrid und 2,2-Dimethyl-1,3-propandiol, also Neopentylglykol, genannt. Die Herstellung der Polyesterpolycarbonsäuren erfolgt nach den dem Fachmann bekannten Bedingungen für Polyveresterungsreaktionen.

Überraschenderweise wurde gefunden, daß auch Umsetzungsprodukte von Epoxidharzen mit Polyesterpolycarbonsäuren mit einem nicht auszuschließenden Anteil an Anhydridgruppen zu hydrolysestabilen, wäßrigen Dispersionen führen.

Erfindungsgemäß besitzt das carboxylgruppenhaltige Bindemittel (A) eine Säurezahl von 50 bis 120, wobei es bevorzugt ist, wenn die Säurezahl des Bindemittels (A) 70 bis 90 beträgt.

Die Erfindung betrifft auch ein Verfahren zur Herstellung eines anionisch abscheidbaren, durch Neutralisation mit Basen wasserdispergierbaren Bindemittels (A) durch Umsetzung von Epoxidharzen auf der Basis von Bisphenolen mit einem Carboxylgruppen enthaltenden Polyester in einem organischen Lösungsmittel oder Lösungsmittelgemisch, das dadurch gekennzeichnet ist, daß als Carboxylgruppen enthaltende Polyester Polykondensate aus aromatischen und/oder aliphatischen Dicarbonsäuren, aromatischen Dicarbonsäureanhydriden, aromatischen Tricarbonsäureanhydriden, aromatischen Tetracarbonsäureanhydriden und -dianhydriden sowie aliphatischen und cycloaliphatischen Di- und Triolen verwendet werden, die Funktionalität des Carboxylgruppen enthaltenden Polyesters 3 bis 8 beträgt, sein mittleres Molekulargewicht kleiner als 2000 g/mol ist, die Epoxidharze ein mittleres Molekulargewicht von mindestens 3000 g/mol aufweisen und das Bindemittel (A) eine Säurezahl von 50 bis 120 hat.

Bevorzugt beträgt die Funktionalität der Polyesterpolycarbonsäure 4 bis 6. Besonders vorteilhaft ist es, wenn die Polyesterpolycarbonsäuren Umsetzungsprodukte einer mindestens dreiwertigen Polycarbonsäure oder eines mindestens dreiwertigen Polycarbonsäureanhydrids mit einem Diol ist. Zu nennen ist hierbei das Kondensationsprodukt aus Trimellithsäureanhydrid und 2,2-Dimethyl-1,3-propandiol.

Die Polyesterpolycarbonsäuren können mit Esterdiolen und/ oder Glycidestern von Monocarbonsäuren modifiziert sein.

Die Säurezahl des Bindemittels (A) beträgt vorteilhafterweise 70 bis 90.

Die Umsetzung der hochmolekularen Epoxidharze mit Polyesterpolycarbonsäuren erfolgt in einem geeigneten Lösungsmittel oder Lösungsmittelgemisch. Die Umsetzungstemperatur beträgt 20 bis 220 °C, bevorzugt ist der Temperaturbereich von 80 bis 150 °C. Vorteilhafterweise werden Katalysatoren, wie z.B. tertiäre Amine, verwendet. Als besonders geeigneter Katalysator ist N,N-Dimethylbenzylamin zu nennen.

3

Die Erfindung betrifft auch ein anionisch abscheidbares, durch Neutralisation mit Basen wasserdispergierbares Elektrotauchlacküberzugsmittel auf der Basis des zuvor beschriebenen, erfindungsgemäßen Epoxidharzbindemittels (A), wobei das Überzugsmittel organisches Lösungsmittel und Wasser sowie ggf. bis zu 16 Gew.-% Vernetzungsmittel (B), bezogen auf die Summe von (A) und (B), sowie ggf. Pigmente, Füllstoffe, Lackhilfsmittel und Katalysatoren enthält. Das Bindemittel (A) ist dabei nach dem zuvor beschriebenen, erfindungsgemäßen Verfahren darstellbar.

Bevorzugt werden als Vernetzungsmittel (B) Aminoplastherze und/oder Phenolharze verwendet. Die erfindungsgemäßen Elektrotauchlacküberzugsmittel enthalten weiterhin ein organisches Lösungsmittel oder ein Gemisch organischer Lösungsmittel, das bzw. die die Effektivität der anodischen Abscheidung und den Verlauf des Lackfilms positiv beeinflussen.

Dabei kommen Monoalkohole mit 4 bis 18 Kohlenstoffatomen, Glykolether, wie beispielsweise Ethylenglykolmonoethylether und dessen höhere Homologe mit 5 bis 20 Kohlenstoffatomen, oder entsprechende Ether des 1,2- und 1,3-Propandiols in Frage. Der Gehalt der wäßrigen Dispersion an Cosolventien, bezogen auf das Gesamtgewicht des Überzugsmittels, beträgt im allgemeinen 1 bis 15 Gew.-%, bevorzugt sind 4 bis 12 Gew.-%.

Die erfindungsgemäßen Elektrotauchlacküberzugsmittel enthalten ggf. Pigmente, Füllstoffe und Lackhilfsmittel. Als letztere sind Weichmacher, Stabilisatoren, Netz- und Dispergiermittel zu nennen. Gegebenenfalls werden auch Katalysatoren verwandt.

Die vorliegende Erfindung betrifft auch ein Verfahren zur Herstellung des zuvor beschriebenen, anionisch abscheidbaren, durch Neutralisation mit Basen wasserdispergierbaren Elektrotauchlacküberzugsmittels, das dadurch gekennzeichnet ist, daß das Bindemittel (A) in organischem Lösungsmittel mit dem Vernetzungsmittel (B) präkondensiert wird und das erhaltene Bindemittelsystem unter Zusatz von Basen in Wasser eindispergiert wird und ggf. Pigmente, Katalysatoren, Füllstoffe und Lackhilfsmittel zugegeben werden, wobei bei der Dispergierung in Wasser ein Festkörpergehalt von 5 bis 40 Gew.-% eingestellt wird.

Die Erfindung betrifft weiterhin ein Verfahren zur Herstellung des beschriebenen Elektrotauchlacküberzugsmittels, das dadurch gekennzeichnet ist, daß das erfindungsgemäße Bindemittel (A) mit dem Vernetzungsmittel (B) in organischem Lösungsmittel vermischt wird, das Gemisch unter Zusatz von Basen in Wasser eindispergiert wird und ggf. Pigmente, Katalysatoren, Füllstoffe und Lackhilfsmittel zugegeben werden, wobei bei der Dispergierung in Wasser ein Festkörpergehalt von 5 bis 40 Gew.-% eingestellt wird.

Die Erfindung betrifft auch ein Verfahren zur Herstellung des beschriebenen Elektrotauchlacküberzugsmittels, das dadurch gekennzeichnet ist, daß das Bindemittel (A) in organischem Lösungsmittel unter Zusatz von Basen in Wasser eindispergiert wird und ggf. Pigmente, Katalysatoren, Füllstoffe und Lackhilfsmittel zugegeben werden, wobei bei der Dispergierung in Wasser ein Festkörpergehalt von 5 bis 40 Gew.-% eingestellt wird.

Die zur Solubilisierung notwendige, zumindest teilweise Neutralisierung der Carboxylgruppen der erfindungsgemäßen Elektrotauchlacküberzugsmittel kann mit den aus der Elektrotauchlackierung bekannten Basen, insbesondere Aminen, erfolgen. Bevorzugt werden tertiäre Amine, besonders bevorzugt Triethylamin und N,N-Dimethylaminoethanol, eingesetzt.

Die Erfindung betrifft auch ein Verfahren zum Beschichten eines elektrisch leitenden Substrats, bei dem das Substrat in ein wäßriges Bad auf der Basis der erfindungsgemäßen, zuvor beschriebenen Überzugsmittel eintaucht, als Anode geschaltet wird, mittels Gleichstrom ein Film auf dem Substrat abgeschieden wird, das Substrat aus dem Bad entfernt wird und der Film durch Einbrennen gehärtet wird.

Die oben beschriebenen erfindungsgemäßen Elektrotauchlacküberzugsmittel werden vorteilhafterweise für die anodische Elektrotauchlackierung von Dosen verwendet. Sie können auch zur Spritzapplikation von Dosen eingesetzt werden. Nachfolgend wird die Erfindung anhand von Beispielen näher erläutert:

Beispiele:

Herstellung einer Polyesterpolycarbonsäure (1)

In einem Vierhalskolben, der mit Rührer, Thermometer und Wasserabscheider ausgerüstet ist, werden 20,6 Teile 4-Methyl-2-pentanon eingewogen und auf 110 °C erwärmt. Dazu werden unter Rühren 35,6 Teile Trimellitsäureanhydrid gegeben. Nach portionsweiser Zugabe von 12,9 Teilen 2,2 Dimethyl-1,3-propandiol wird innerhalb von 6 Stunden von 110 °C auf 200 °C erwärmt. Das bei der Kondensation freigesetzte Wasser wird über den Wasserabscheider abgetrennt. Wenn die Säurezahl auf 300 mg KOH/g gesunken ist, wird das 4-Methyl-2-pentanon im Vakuum abdestilliert und die Temperatur auf 140 °C gesenkt. Nach Zugabe von 31,0 Teilen Ethylenglykolmonobutylether resultiert eine 60 %-ige Lösung, die 40 %-ig in Ethylenglykolmonobutylether eine Viskosität von 300 mPa.s (23 °C) besitzt.

4

Beispiel 1: Modifizierung eines Epoxidharzes mit der Polyesterpolycarbonsäure (1)

In einem Vierhalskolben, der mit Rührer, Thermometer und Rückflußkühler ausgerüstet ist, werden 31,1 Teile der Polyesterpolycarbonsäure (1) mit 25,0 Teilen Ethylenglykolmonobutylether gemischt und unter Rühren auf 120 °C erwärmt. Dazu werden portionsweise 37,46 Teile eines hochmolekularen Epoxidharzes auf Basis von Bisphenol A mit einem Epoxidäquivalentgewicht von 3300 gegeben. Nach Erwärmung auf 130 °C und Zugabe von 0,14 Teilen N,N -Dimethylbenzylamin wird 7 Stunden bei 130 °C gerührt. Die Säurezahl fällt dabei auf 71 mg KOH/g.

Nach Abkühlen auf 90 °C werden 6,3 Teile eines Phenolformaldehydharzes (Resol-Typ auf Basis Bisphenol A) zugegeben und der Ansatz 2 Stunden bei 90 °C gerührt. Nach Abkühlen auf 60 °C werden 6,3 Teile Triethylamin zugefügt und der Festkörper mit Ethylenglykolmonobutylether auf 55 % eingestellt.

Vergleichsbeispiel 1: Modifizierung eines Epoxidharzes mit Trimellithsäureanhydrid

Zur Herstellung eines Vergleichsansatzes wird das in Beispiel 1 eingesetzte hochmolekulare Epoxidharz nach Veresterung der Glycidylreste mit einer Monocarbonsäure mit Trimellithsäureanhydrid umgesetzt.

Dazu werden 41,8 Teile eines hochmolekularen Epoxidharzes auf Basis von Bisphenol A mit einem Epoxidäquivalentgewicht von 3300 in 41,0 Teilen Ethylengklykolmonobutylether gelöst und bei 130 °C mit 1,94 Teilen Isononansäure und 0,06 Teilen N, N-Dimethylbenzylamin umgesetzt, bis die Säurezahl auf unter 3 mg KOH/g gefallen ist. Es werden 7,7 Teile Trimellitsäureanhydrid zugegeben und die Temperatur gehalten, bis eine Säurezahl von 80 mg KOH/g erreicht ist. Nach Abkühlen auf 90 °C werden 3,5 Teile eines Phenolformaldehydharzes (Resol-Typ auf Basis Bisphenol A) zugegeben und der Ansatz 2 Stunden bei 90 °C gerührt. Nach Abkühlen auf 60 °C werden 4,0 Teile Triethylamin zugefügt. Der Festkörper liegt dann bei 55 %.

Vergleichsbeispiel 2: Modifizierung eines Epoxidharzes mit Tetrahydrophthalsäureanhydrid

Zur Herstellung einer weiteren Vergleichsbindung wird das in Beispiel 1 eingesetzte hochmolekulare Epoxidharz nach Veresterung der Glycidylreste mit einer Monocarbonsäure mit Tetrahydrophthalsäureanhydrid umgesetzt.

Dazu wird wie in Vergleichsbeispiel 1 beschrieben verfahren, wobei jedoch die 7,7 Teile Trimellithsäureanhydrid durch 11,6 Teile Tetrahydrophthalsäureanhydrid ersetzt werden und bis auf eine Säurezahl von 73 mg KOH/g kondensiert wird.

Herstellung von Bindemittel-Dispersionen aus den Bindemitteln des Beispiels 1 und der Vergleichsbeispiele 1 und 2

Die Bindemittellösungen des Beispiels 1 und der Vergleichsbeispiele 1 und 2 werden jeweils langsam unter starkem Rühren in entionisiertes Wasser eindispergiert und auf einen Festkörper von 25 % eingestellt. Die Eigenschaften und Kennzahlen der resultierenden Dispersionen sind in Tabelle 1 zusammengestellt.

Tabelle 1

| Dispersion | A | B | C |
|---|---|---|---|
| Bindemittel | Beispiel 1 | Vergleichsbeispiel 1 | Vergleichsbeispiel 2 |
| Lagerstabilität der Dispersion | >6 mon (20 °C) | <1 mon (20 °C) | <1 mon (20 °C) |
| pH-Wert | 7,8 | 8,5 | 5,9 |
| spez. Leitfähigkeit ($\mu$S/cm) | 2500 | 2000 | 2200 |

Die Bindemittel-Dispersionen B und C besitzen keine ausreichende Lagerstabilität bei Raumtemperatur.

Nach einem Monat ist das Bindemittel weitgehend koaguliert und die Dispersion zerstört. Die Dispersion A ist dagegen auch nach 6 Monaten Lagerung bei Raumtemperatur frei von Sediment.

Beispiel 2: Beschichtung einer Getränkedose mit der Bindemitteldispersion A aus Tabelle 1

Die anionische Bindemittel-Dispersion wird auf einen Festkörper von 12,5 % mit entionisiertem Wasser verdünnt. Eine unlackierte, zweiteilige Getränkedose aus Weißblech wird am Bördelrand mit einer elektrisch leitenden Klammer gehalten, mit dem Elektrotauchlack gefüllt und in ein gegen Erde isoliertes, leitendes Gefäß mit einem Durchmesser von 20 cm vollständig eingetaucht, welches zuvor ebenfalls mit dem Elektrotauchlack befüllt worden ist. Der positive Pol einer Gleichstromspannungsquelle wird an die Dose und der negative Pol an das Außengefäß angeschlossen. Die Beschichtung erfolgt unter Verwendung einer Hilfskathode im Inneren der Dose. Nach dem Abspülen mit entionisiertem Wasser wird 2 min bei 210 °C im Umluftofen eingebrannt. Die Dose ist innen und außen vollständig mit einem dünnen Klarlackfilm überzogen, der porendicht ist. Meßwerte vgl. Tabelle 2.

Beispiel 3: Beschichtung einer Getränkedose mit der pigmentierten Bindemittel-Dispersion A aus Tabelle 1

Das Bindemittel aus Beispiel 1 wird mit Titandioxid pigmentiert (Bindemittel: Pigment = 1 : 1) und auf einen Festkörper von 12,5 % mit entionisiertem Wasser verdünnt.

Die Beschichtung erfolgt analog zu Beispiel 2. Die Dose ist vollständig mit einem weißen Lackfilm überzogen. Meßwerte vgl. Tabelle 2.

Vergleichsbeispiel 3: Beschichtung einer Getränkedose mit der Bindemittel-Dispersion B

Die anionische Bindemittel-Dispersion B wird auf einen Festkörper von 12,5 % mit entionisiertem Wasser verdünnt. Die Beschichtung erfolgt analog zu Beispiel 2. Die Dose ist innen und außen mit einem matten Klarlackfilm überzogen, der nicht porendicht ist und Oberflächenstörungen aufweist. Meßwerte vgl. Tabelle 2.

Vergleichsbeispiel 4: Beschichtung einer Getränkedose mit der Bindemittel-Dispersion C

Die anionische Bindemittel-Dispersion C wird auf einen Festkörper von 12,5 % mit entionisiertem Wasser verdünnt. Die Beschichtung erfolgt analog zu Beispiel 2. Die Dose ist innen und außen mit einem matten Klarlackfilm überzogen, der nicht porendicht ist und Oberflächenstörungen aufweist. Meßwerte vgl. Tabelle 2.

Tabelle 2

|  | Beispiel 2 | Beispiel 3 | Vergleichs-beispiel 3 | Vergleichs-beispiel 4 |
|---|---|---|---|---|
| Festkörper | 12,5 % | 12,5 % | 12,5 % | 12,5 % |
| pH-Wert | 7,8 | 7,8 | 8,5 | 5,9 |
| spez. Leitf. | 2500 µS/cm | 2600 µS/cm | 2000 µS/cm | 2200 µS/cm |
| Badtemperatur | 27 °C | 27 °C | 27 °C | 27 °C |
| Abscheide-zeit | 20 s | 20 s | 20 s | 20 s |
| Abscheide-spannung | 50 V | 60 V | 160 V | 90 V |
| Lackauf-lage/Dose | 480 mg | 750 mg | 450 mg | 460 mg |
| Oberfläche | glänzend | glänzend | matt | matt |
| Porigkeit mA (Enamel-rater) | 0,0 | 0,0 | 10 | 10 |
| Lackhaftung (Gitterschnitt) | Gt 0 | Gt 0 | Gt 1 | Gt 1 |
| Sterilisation mit Wasser (30min/121 °C) | i. O. | i. O. | Wasserauf-nahme (Blushing) | Wasserauf-nahme (Blushing) |

Die abgeschiedenen und eingebrannten Lackfilme zeigen in allen Beispielen keinerlei geruchliche, geschmackliche oder farbliche Beeinträchtigungen gegenüber Wasser als Füllgut. Gleichartige Ergebnisse werden erzielt, wenn anstelle einer 2-teiligen Getränkedose aus Weißblech eine solche aus Aluminium verwendet wird.

Beispiel 4: Beschichtung einer Getränkedose mittels Spritzlackierung mit der Bindemitteldispersion A

Mit der anionischen Bindemitteldispersion A wird die Innenseite einer 2-teiligen Getränkedose aus Weißblech spritzlackiert. Als Spritzdruck wird 65 bar gewählt. Die Lackierung wird 2 min bei 210 °C im Umluftofen eingebrannt. Es resultiert eine aufgetragene Lackschicht von 220 mg trocken /0,33 l-Dose. Der Lackfilm ist klar und glänzend und weist eine Porigkeit (Enamelrater) von 0,8 mA auf. Die übrigen lacktechnischen Eigenschaften (Haftung und Sterilisationsbeständigkeit) entsprechen denen der Beispiele 2 und 3 aus Tabelle 2.

**Patentansprüche**

1. Anionisch abscheidbares, durch Neutralisation mit Basen wasserdispergierbares Bindemittel (A), erhältlich durch Umsetzung von Epoxidharzen auf der Basis von Bisphenolen mit einem Carboxylgruppen enthaltenden Polyester, dadurch gekennzeichnet, daß als Carboxylgruppen enthaltende Polyester Polykondensate aus aromatischen und/oder aliphatischen Dicarbonsäuren, aromatischen Dicarbonsäureanhydriden, aromatischen Tricarbonsäureanhydriden, aromatischen Tetracarbonsäureanhydriden und -dianhydriden sowie aliphatischen und cycloaliphatischen Di- und Triolen verwendet werden, die Funktionalität des Carboxylgruppen enthaltenden Polyesters 3 bis 8 beträgt, sein mittleres Molekulargewicht kleiner als 2000 g/mol ist, die Epoxidharze ein mittleres Molekulargewicht von mindestens 3000 g/mol aufweisen und das Bindemittel (A) eine Säurezahl von 50 bis 120 hat.

2. Verfahren zur Herstellung eines anionisch abscheidbaren, durch Neutralisation mit Basen wasserdispergierbaren Bindemittels (A) durch Umsetzung von Epoxidharzen auf der Basis von Bisphenolen mit einem Carboxylgruppen enthaltenden Polyester in einem organischen Lösungsmittel oder Lösungsmittelgemisch, dadurch gekennzeichnet, daß als Carboxylgruppen enthaltende Polyester Polykondensate aus aromatischen und/oder aliphatischen Dicarbonsäuren, aromatischen Dicarbonsäureanhydriden, aromatischen Tricarbonsäureanhydriden, aromatischen Tetracarbonsäureanhydriden und -dianhydriden sowie aliphatischen und cycloaliphatischen Di- und Triolen verwendet werden, die Funktionalität des Carboxylgruppen enthaltenden Polyesters 3 bis 8 beträgt, sein mittleres Molekulargewicht kleiner als 2000 g/mol ist, die Epoxidharze ein mittleres Molekulargewicht von mindestens 3000 g/mol aufweisen und das Bindemittel (A) eine Säurezahl von 50 bis 120 hat.

3. Bindemittel oder Verfahren nach Anspruch 1 oder 2, dadurch gekennzeichnet, daß die Funktionalität der Polyesterpolycarbonsäuren 4 bis 6 beträgt.

4. Bindemittel oder Verfahren nach Anspruch 1, 2 oder 3, dadurch gekennzeichnet, daß die Polyesterpolycarbonsäuren Umsetzungsprodukte einer mindestens dreiwertigen Polycarbonsäure oder eines mindestens dreiwertigen Polycarbonsäureanhydrids mit einem Diol sind.

5. Bindemittel oder Verfahren nach Anspruch 4, dadurch gekennzeichnet, daß die Polyesterpolycarbonsäuren Kondensationsprodukte aus Trimellitsäureanhydrid und 2,2-Dimethyl-1,3-propandiol sind.

6. Bindemittel oder Verfahren nach Anspruch 1, 2, 3, 4 oder 5, dadurch gekennzeichnet, daß die Polyesterpolycarbonsäuren mit Esterdiolen und/oder Glycidestern von Monocarbonsäuren modifiziert sind.

7. Bindemittel oder Verfahren nach Anspruch 1, 2, 3, 4, 5 oder 6, dadurch gekennzeichnet, daß die Säurezahl des Bindemittels (A) 70 bis 90 beträgt.

8. Verfahren nach Anspruch 2 bis 7, dadurch gekennzeichnet, daß die Umsetzung des Epoxidharzes mit den Polyesterpolycarbonsäuren bei 80 bis 150 °C, ggf. unter Verwendung eines Katalysators, durchgeführt wird.

9. Anionisch abscheidbares, durch Neutralisation mit Basen wasserdispergierbares Elektrotauchlacküberzugsmittel auf der Basis des Bindemittels (A), hergestellt nach Anspruch 2 bis 8, wobei das Überzugsmittel organisches Lösungsmittel und Wasser sowie ggf. bis zu 16 Gew.-% Vernetzungsmittel (B), bezogen auf die Summe von (A) und (B), sowie ggf. Pigmente, Füllstoffe, Lackhilfsmittel und Katalysatoren enthält.

10. Elektrotauchlacküberzugsmittel nach Anspruch 9, dadurch gekennzeichnet, daß das Vernetzungsmittel (B) Aminoplastharze und/oder Phenolharze sind.

11. Elektrotauchlacküberzugsmittel nach Anspruch 9 oder 10, dadurch gekennzeichnet, daß es 1 bis 15 Gew.-%, vorzugsweise 4 bis 12 Gew.-%, bezogen auf das Gesamtgewicht des Überzugsmittels, organisches oder organische Lösungsmittel enthält.

12. Verfahren zur Herstellung des anionisch abscheidbaren, durch Neutralisation mit Basen wasserdispergierbaren Elektrotauchlacküberzugsmittels nach Anspruch 9 bis 11, dadurch gekennzeichnet, daß das Bindemittel (A) mit dem Vernetzungsmittel (B) in organischem Lösungsmittel präkondensiert wird und das erhaltene Bindemittelsystem unter Zusatz von Basen in Wasser eindispergiert wird und gegebenenfalls Pigmente, Katalysatoren, Füllstoffe und Lackhilfsmittel zugegeben werden, wobei bei der Dispergierung in Wasser ein Festkörpergehalt von 5 bis 40 Gewichts-% eingestellt wird.

13. Verfahren zur Herstellung des anionisch abscheidbaren, durch Neutralisation mit Basen wasserdispergierbaren Elektrotauchlacküberzugsmittels nach Anspruch 9 bis 11, dadurch gekennzeichnet, daß das Bindemittel (A) mit dem Vernetzungsmittel (B) in organischem Lösungsmittel vermischt wird, das Gemisch unter Zusatz von Basen in Wasser eindispergiert wird und gegebenenfalls Pigmente, Katalysatoren, Füllstoffe und Lackhilfsmittel zugegeben werden, wobei bei der Dispergierung in Wasser ein Festkörpergehalt von 5 bis 40 Gewichts-% eingestellt wird.

14. Verfahren zur Herstellung des anionisch abscheidbaren, durch Neutralisation mit Basen wasserdispergierbaren Elektrotauchlacküberzugsmittels nach Anspruch 9 bis 11, dadurch gekennzeichnet, daß das Bindemittel (A) in organischem Lösungsmittel unter Zusatz von Basen in Wasser eindispergiert wird und gegebenenfalls Pigmente, Katalysatoren, Füllstoffe und Lackhilfsmittel zugegeben werden, wobei bei der Dispergierung in Wasser ein Festkörpergehalt von 5 bis 40 Gewichts-% eingestellt wird.

15. Verfahren zum Beschichten eines elektrisch leitenden Substrats, bei dem das Substrat in ein wässriges Bad auf der Basis des Überzugsmittels, hergestellt nach Anspruch 12, 13 oder 14, eintaucht, das Substrat als Anode geschaltet wird, mittels Gleichstrom ein Film auf dem Substrat abgeschieden wird, das Substrat aus dem Bad entfernt wird und der Film durch Einbrennen gehärtet wird.

16. Verwendung des anionisch abscheidbaren Elektrotauchlacküberzugsmittels, hergestellt nach dem Verfahren nach Anspruch 12, 13 oder 14, für die anodische Elektrotauchlackierung von Dosen.

17. Verwendung des Überzugsmittels, hergestellt nach dem Verfahren nach Anspruch 12, 13 oder 14, für die Spritzlackierung von Dosen.

**Claims**

1. Anionically depositable binder (A) which is water-dispersible on neutralization with bases and is obtainable by reaction of epoxy resins based on bisphenols with a carboxyl-containing polyester, characterised in that the carboxyl-containing polyesters used are polycondensates of aromatic and/or aliphatic dicarboxylic acids, aromatic dicarboxylic anhydrides, aromatic tricarboxylic anhydrides, aromatic tetracarboxylic anhydrides and dianhydrides and also aliphatic and cycloaliphatic di- and triols, the functionality of the carboxyl-containing polyester is from 3 to 8, its average molecular weight is less than 2000 g/mol, the epoxy resins have an average molecular weight of at least 3000 g/mol and the binder (A) has an acid number of from 50 to 120.

2. Process for preparing an anionically depositable binder (A) which is water-dispersible on neutralisation with bases by reacting epoxy resins based on bisphenols with a carboxyl-containing polyester in an organic solvent or solvent mixture, characterised in that the carboxyl-containing polyesters used are polycondensates of aromatic and/or aliphatic dicarboxylic acids, aromatic dicarboxylic anhydrides, aromatic tricarboxylic anhydrides, aromatic tetracarboxylic anhydrides and dianhydrides and also aliphatic and cycloaliphatic di- and triols, the functionality of the carboxyl-containing polyester is from 3 to 8, its average molecular weight is less than 2000 g/mol, the epoxy resins have an average molecular weight of at least 3000 g/mol and the binder (A) has an acid number of from 50 to 120.

3. Binder or process according to Claim 1 or 2, characterised in that the functionality of the polyester polycarboxylic acids is from 4 to 6.

4. Binder or process according to Claim 1, 2 or 3, characterised in that the polyester polycarboxylic acids are reaction products of an at least tribasic polycarboxylic acid or of an at least tribasic polycarboxylic anhydride with a diol.

5. Binder or process according to Claim 4, characterised in that the polyester polycarboxylic acids are condensation products of trimellitic anhydride and 2,2-dimethyl-1,3-propanediol.

6. Binder or process according to Claim 1, 2, 3, 4 or 5, characterised in that the polyester polycarboxylic acids have been modified with ester diols and/or glycidyl esters of monocarboxylic acids.

7. Binder or process according to Claim 1, 2, 3, 4, 5 or 6, characterised in that the acid number of the binder (A) is 70 to 90.

8. Process according to Claim 2 to 7, characterised in that the reaction of the epoxy resin with the polyester polycarboxylic acids is carried out at 80 to 150° C in the presence or absence of a catalyst.

9. Anionically depositable electrocoating agent which is water-dispersible on neutralisation with bases and which is based on the binder (A), prepared according to Claim 2 to 8, the coating agent containing organic solvent and water and also, if desired, up to 16 % by weight of crosslinking agent (B), based on the total amount of (A) and (B), as well as, if desired, pigments, fillers, coating assistants and catalysts.

10. Electrocoating agent according to Claim 9, characterised in that crosslinking agent (B) is an amino resin and/or a phenolic resin.

11. Electrocoating agent according to Claim 9 or 10, characterised in that it contains 1 to 15 % by weight, preferably 4 to 12 % by weight, based on the total weight of the coating agent, of organic solvent or solvents.

12. Process for preparing the anionically depositable electrocoating agent according to Claim 9 to 11, which is water-dispersible on neutralisation with bases, characterised in that the binder (A) is precondensed with crosslinking agent (B) in an organic solvent and the resulting binder system is dispersed in the presence of bases in water and, if desired, pigments, catalysts, fillers and coating assistants are added, a solids content of 5 to 40 % by weight being set in the course of the dispersing in water.

13. Process for preparing the anionically depositable electrocoating agent according to Claim 9 to 11, which is water-dispersible on neutralisation with bases, characterised in that the binder (A) is mixed with crosslinking agent (B) in an organic solvent, the mixture is dispersed in the presence of bases in water and, if desired, pigments, catalysts, fillers and coating assistants are added, a solids content of 5 to 40 % by weight being set in the course of the dispersing in water.

14. Process for preparing the anionically depositable electrocoating agent according to Claim 9 to 11, which is water-dispersible on neutralisation with bases, characterised in that the binder (A) is dispersed in an organic solvent in the presence of bases in water and, if desired, pigments, catalysts, fillers and coating assistants are added, a solids content of 5 to 40 % by weight being set in the course of the dispersing in water.

15. Process for coating an electroconductive substrate by dipping the substrate into an aqueous bath based on the coating agent prepared according to Claim 12, 13 or 14, connecting the substrate as the anode, depositing a film on the substrate by means of direct current, removing the substrate from the bath and curing the film by baking.

16. Method of using the anionically depositable electrocoating agent prepared by the process according to Claim 12, 13 or 14, for the anodic electrocoating of cans.

17. Method of using the coating agent prepared by the process according to Claim 12, 13 or 14, for the spray-coating of cans.

**Revendications**

1. Liant (A) pouvant être déposé par voie anionique, dispersable dans l'eau par neutralisation par des bases, et pouvant être obtenu par réaction de résines époxydiques à base de bisphénols avec un polyester contenant des groupes carboxyle, caractérisé par le fait que, comme polyesters contenant des groupes carboxyle, sont utilisés des polycondensats d'acides dicarboxyliques aromatiques et/ou aliphatiques, d'anhydrides d'acides dicarboxyliques aromatiques, d'anhydrides d'acides tricarboxyliques aromatiques, d'anhydrides et dianhydrides d'acides tétracarboxyliques aromatiques, ainsi que de di- et triols aliphatiques et cycloaliphatiques, la fonctionnalité du polyester contenant des groupes carboxyle s'élève à 3 à 8, sa masse moléculaire moyenne est inférieure a 2000 g/mole, les résines époxydiques présentent une masse moléculaire moyenne d'au moins 3000 g/mole, et le liant (A) a un indice d'acide de 50 à 120.

2. Procédé de fabrication d'un liant (A) pouvant être déposé par voie anionique, dispersable dans l'eau par neutralisation par des bases, par réaction de résines époxydiques à base de bisphénols avec un polyester contenant des groupes carboxyle, dans un solvant organique ou un mélange de solvants organiques, caractérisé par le fait que l'on utilise, comme polyesters contenant des groupes carboxyle, des polycondensats d'acides dicarboxyliques aromatiques et/ou aliphatiques, d'anhydrides d'acides dicarboxyliques aromatiques, d'anhydrides d'acides tricarboxyliques aromatiques, d'anhydrides et dianhydrides d'acides tétracarboxyliques aromatiques ainsi que de di- et triols aliphatiques et cycloaliphatiques, la fonctionnalité du polyester contenant des groupes carboxyle s'élève à 3 à 8, sa masse moléculaire moyenne est inférieure à 2000 g/mole, les résines époxydiques présentent une masse moléculaire moyenne d'au moins 3000 g/mole, et le liant (A) a un indice d'acide de 50 à 120.

3. Liant ou procédé selon la revendication 1 ou 2, caractérisé par le fait que la fonctionnalité des polyesters-acides polycarboxyliques s'élève à 4 à 6.

4. Liant ou procédé selon l'une des revendications 1, 2 ou 3, caractérisé par le fait que les polyesters-acides polycarboxyliques sont des produits de réaction d'un acide polycarboxylique au moins trivalent ou un anhydride d'acide polycarboxylique au moins trivalent avec un diol.

5. Liant ou procédé selon la revendication 4, caractérisé par le fait que les polyesters-acides polycarboxyliques sont des produits de condensation de l'anhydride de l'acide trimellitique et du diméthyl-2,2 propanediol-1,3.

6. Liant ou procédé selon l'une des revendications 1, 2, 3, 4 ou 5, caractérisé par le fait que les polyesters-acides polycarboxyliques sont modifiés par des esterdiols et/ou des esters glycidyliques d'acides monocarboxyliques.

7. Liant ou procédé l'une des revendications 1, 2, 3, 4, 5 ou 6, caractérisé par le fait que l'indice d'acide du liant (A) s'élève à 70 à 90.

8. Procédé selon l'une des revendications 2 à 7, caractérisé par le fait qu'on conduit la réaction de la résine époxydique avec les polyesters-acides polycarboxyliques à 80 à 150°C, le cas échéant avec utilisation d'un catalyseur.

9. Agent de revêtement de laquage par électrodéposition, pouvant être déposé par voie anionique, dispersable dans l'eau par neutralisation par des bases, à base du liant (A), préparé par le procédé tel que défini à l'une des revendications 2 à 8, l'agent de revêtement contenant un solvant organique et de l'eau ainsi que, le cas échéant, jusqu'à 16% en poids d'un agent de réticulation (B), par rapport à la somme de (A) et (B), de même que, le cas échéant, des pigments, des charges, des adjuvants de laquage et des catalyseurs.

10. Agent de revêtement de laquage par électrodéposition selon la revendication 9, caractérisé par le fait que l'agent de réticulation (B) est choisi parmi les résines aminoplastes et/ou les résines phénoliques.

11. Agent de revêtement de laquage par électrodéposition selon l'une des revendications 9 ou 10, caractérisé par le fait qu'il contient 1 à 15% en poids, de préférence, 4 à 12% en poids, par rapport au poids total de l'agent de revêtement, de solvant organique ou d'un mélange de solvants organiques.

12. Procédé de fabrication de l'agent de revêtement de laquage par électrodéposition, pouvant être déposé par voie anionique, dispersable dans l'eau par neutralisation par des bases, tel que défini à l'une des revendications 9 à 11, caractérisé par le fait qu'on conduit une précondensation du liant (A) avec l'agent de réticulation (B) dans un solvant organique et qu'on disperse dans l'eau le système de liant obtenu, sous addition de bases, et, le cas échéant, on ajoute des pigments, des catalyseurs, des charges et des adjuvants de laquage, où lors de la dispersion dans l'eau, on règle à une teneur en corps solides de 5 à 40% en poids.

13. Procédé de fabrication de l'agent de revêtement de laquage par électrodéposition, pouvant être déposé par voie anionique, dispersable dans l'eau par neutralisation par des bases, tel que défini à l'une des revendications 9 à 11, caractérisé par le fait qu'on mélange le liant (A) avec l'agent de réticulation (B) dans un solvant organique, qu'on disperse le mélange dans l'eau, sous addition de bases, et, le cas échéant, on ajoute des pigments, des catalyseurs, des charges et des adjuvants de laquage, où, lors de la dispersion dans l'eau, on règle à une teneur en corps solides de 5 à 40% en poids.

14. Procédé de fabrication de l'agent de revêtement de laquage par électrodéposition, pouvant être déposé par voie anionique, dispersable dans l'eau par neutralisation par des bases, tel que défini à l'une des revendications 9 à 11, caractérisé par le fait qu'on disperse dans l'eau le liant (A) en solvant organique, sous addition de bases, et, le cas échéant, on ajoute des pigments, des catalyseurs, des charges et des adjuvants de laquage, où, lors de la dispersion dans l'eau, on règle à une teneur en corps solides de 5 à 40% en poids.

15. Procédé de revêtement d'un substrat conducteur de l'électricité, suivant lequel on plonge le substrat dans un bain aqueux à base de l'agent de revêtement préparé par le procédé tel que défini à l'une des revendications 12, 13 ou 14, on monte le substrat en anode, on dépose un film sur le substrat à l'aide de courant continu, on retire le substrat du bain et on durcit le film par cuisson.

16. Utilisation de l'agent de revêtement de laquage par électrodéposition, pouvant être déposé par voie anionique, préparé par le procédé tel que défini à l'une des revendications 12, 13 ou 14, pour le laquage de boîtes par électrodéposition anodique.

17. Utilisation de l'agent de revêtement, préparé par le procédé tel que défini à l'une des revendications 12, 13 ou 14, pour le laquage de boîtes au pistolet.